# EUROPÄISCHE PATENTSCHRIFT

(11) **EP 0 518 075 B1**
(45) Veröffentlichungstag und Bekanntmachung des Hinweises auf die Patenterteilung: **05.10.1994**
(21) Anmeldenummer: 92108220.2
(22) Anmeldetag: 15.05.1992
(51) Int. Cl.: C02F 1/46

(54) **Verfahren zur Aufarbeitung von salzsäurehaltigem, mit Begleitstoffen verunreinigtem Wasser**
Process for reprocessing contaminated water containing hydrochloric acid
Procédé pour le retraitement d'eaux usées contenant de l'acide chlorhydrique

(30) Priorität: 14.06.1991 DE 4119606
(43) Veröffentlichungstag der Anmeldung: 16.12.1992
(73) Patentinhaber: SIGRI GREAT LAKES CARBON GmbH, D-65203 Wiesbaden (DE)
(72) Erfinder: Härtel, Georg, Dr. Ing. habil., W-8500 Nürnberg 80 (DE); Meissner, Wolfgang, Dipl.-Ing., W-8524 Neunkirchen (DE); Künzel, Jürgen, Dipl.-Ing. Dr., W-8851 Thierhaupten (DE)

(56) Entgegenhaltungen:
- EP-A- 0 171 478
- EP-A- 0 210 769
- EP-A- 0 405 565
- FR-A- 2 271 177
- PATENT ABSTRACTS OF JAPAN vol. 3, no. 75 (C-50)27 June 1979
- WORLD PATENTS INDEX LATEST Section Ch, Week 8313, Derwent Publications Ltd.,London, GB; Class C, AN 83-30791K

## Beschreibung

Die Erfindung betrifft ein Verfahren zur Aufarbeitung von salzsäurehaltigem mit Begleitstoffen verunreinigtem Wasser mit den Merkmalen im Oberbegriff des Hauptanspruchs.

In der Praxis fallen derartige salzsäurehaltige Wässer beispielsweise in Rauchgas-Wäschern von Müllverbrennungsanlagen an. Ähnliches ist auch bei anderen nassen Abgas-Reinigungsverfahren oder auch bei organischen Synthesen der Fall. Derartige Abwässer entstehen ferner bei Badbehandlungen, zum Beispiel in Galvanikbädern. Die Wässer enthalten Abfall-Salzsäure, die häufig in einer höheren Konzentration von 1 % oder mehr vorliegt. Die Wässer sind mit zahlreichen Begleitstoffen in fester oder flüssiger Form verunreinigt. Bei Rauchgas-Wäschen sind dies beispielsweise Partikel aus der Verbrennung, Flußsäure, Schwefelsäure, Metallsalze und auch organische Verbindungen.

Die Verwertung dieser Wässer, insbesondere die Reinigung, Aufbereitung und Wiederverwendung der Abfall-Salzsäure, ist in der Praxis nur durch mehrstufige komplexe Verfahren unter hohem Energieeinsatz möglich. Beispielsweise wären dies Filtrationen in Verbindung mit einer Mehrstufendestillation, zum Teil auch mit Hilfschemikalien oder einer Neutralisation verbunden mit einer Abscheidung und Reinigung der Salze etc. Diese Verfahren sind einerseits aufwendig und haben andererseits nicht den erwünschten Wirkungsgrad.

Es ist daher Aufgabe der vorliegenden Erfindung, eine bessere Möglichkeit zur Aufarbeitung der salzsauren verunreinigten Wässer und der Wiederverwertung der enthaltenen Salzsäure und der Begleitstoffe wie Metallionen aufzuzeigen.

Die Erfindung löst diese Aufgabe mit den Merkmalen im Verfahrenshauptanspruch.

Mit der Erfindung wird vorgeschlagen, das Wasser mit der darin enthaltenen Abfall-Salzsäure einer Wirbelschicht-Elektrolyse zu unterwerfen, wobei Chlor und Wasserstoff getrennt gewonnen werden. Hierbei kommt es auf die Wirbelschicht besonders an. Sie sorgt dafür, daß der Prozeß überhaupt funktioniert. Die Wirbelschichtpartikel nehmen bei Berührungen mit der in ihrem Wirkungsbereich befindlichen Elektrode direkt oder durch Zusammenstöße mit anderen Partikeln elektrische Ladungen auf und geben sie, mit einer elektrochemischen Reaktion gekoppelt, an die in der Elektrolytlösung vorhandenen Reaktionspartner ab. Eine Elektrolyse verläuft nur dann störungsfrei, wenn die Elektroden- und Partikeloberflächen sauber sind. Besonders bei verunreinigten Elektrolytlösungen kommt es bei herkömmlichen Elektrolyseanlagen sehr bald zu Verschmutzungen der Elektrodenoberflächen und damit zu einer drastischen Senkung des Wirkungsgrades. Diesen Nachteil haben Wirbelschichtelektrolysen nicht, da durch die ständigen Zusammenstöße der Wirbelschichtpartikel untereinander und mit den Elektrodenoberflächen und die mit den Bewegungen der Wirbelschichtpartikel einhergehenden Reibungsprozesse die elektrische Ladungen übertragenden Oberflächen stets sauber und aktiv bleiben. Ein weiterer Vorteil des Verfahrens ist es, daß die Wirbelschicht eine anodische Oxidation oder kathodische Reduktion von in geringer Konzentration vorliegenden organischen Begleitstoffen ermöglicht und daß auch andere, elektrochemisch abscheidbare Begleitstoffe wie z.B. Metallionen auf den Wirbelschichtpartikeln abgeschieden und einer Wiederverwendung zugeführt werden können.

Das erfindungsgemäße Verfahren zeichnet sich im Vergleich zu den bisher bekannten Verfahren durch einen hohen Wirkungsgrad bei vergleichsweise geringem verfahrenstechnischem Aufwand aus. Trotz der verwendeten, niedrigen Salzsäurekonzentration und des vergleichsweise hohen Gehalts an Verunreinigungen wird hier eine für Elektrolyseverfahren hohe Stromausbeute von über 90 % erzielt.

Mit der Aufarbeitung der Abfall-Salzsäure und der Gewinnung von Chlor- und Wasserstoffgas geht der weitere Vorteil einher, hieraus in einer nachgeschalteten Chlorwasserstoffsynthese wieder Salzsäure von großer Reinheit und in hoher Konzentration herstellen zu können. Aus der Abfall-Salzsäure wird so ein gefragter Wertstoff gewonnen.

In der Praxis ist es zwar bekannt, Salzsäure einem Elektrolyse-Prozeß zu unterwerfen. Hierbei handelt es sich jedoch um ein einfaches Elektrolyse-Verfahren ohne Wirbelschicht. Das bekannte Verfahren setzt hierbei reine Salzsäure voraus und läßt sich nicht mit den der Erfindung zugrundeliegenden verunreinigten salzsäurehaltigen Wässern durchführen. Hierbei würde sich nämlich die vorerwähnte Belagsbildung auf den stromführenden Elektroden und auf den Trennmembranen mit der Folge eines unerwünschten Spannungsanstiegs und damit verbunden, eines Abfalls des Wirkungsgrades und der vermehrten Bildung unerwünschter Nebenprodukte einstellen. Im Extremfall käme es sogar zum Stopp der Elektrolyse. Es besteht auch die Gefahr von Überspannungseffekten, Verschmutzung oder Zerstörung von Ionenaustauschmembranen etc. Die Elektrolyse von Salzsäure nach dem Stand der Technik benötigt ferner in der Regel möglichst hohe Säurekonzentrationen, die meist die Werte, wie sie in Wässern der genannten Art normalerweise vorliegen, übersteigen.

Eine andere Art der Gewinnung von Chlor und Wasserstoff aus salzsäurehaltigen Lösungen ist in dem U.S.- Patent Nr. 4 239 607 beschrieben. Man bedient sich dort einer Aufschlämmung von feinen Feststoffteilchen mit großer Oberfläche, an denen die Halogenwasserstoffsäure adsorbiert ist. Bei Berührung mit stationären Elektroden wird die auf den Partikeln adsorbierte Halogenwasserstoffsäure gespalten und es werden Chlor und Wasserstoff erzeugt. Ein schwerwiegender Nachteil des Verfahrens ist es, daß große Mengen von Feststoffpartikeln benötigt werden, die in einer Aufschlämmung ständig in der gesamten, aus mindestens einem Absorber, einer elektrochemischen Zelle und den dazugehörenden Fördereinrichtungen besteht, im Kreislauf geführt werden müssen. Eine Wirbelschichtelektrolyse ist durch dieses Patent nicht nahegelegt.

Die Wirbelschicht-Elektrolyse ist jedoch bekannt, dient in der Praxis aber einem anderen Zweck und arbeitet mit anderen Ausgangsstoffen. Sie wird in der Regel für die Elektrolyse stark verdünnter Lösungen verwendet. Das Ziel der bekannten Verfahren ist die Abscheidung metallischer Komponenten aus dem Elektrolyt (siehe z.B. EP 0 171 478), die zudem nur in sehr kleinen Konzentrationen vorliegen.

Mit dem erfindungsgemäßen Verfahren werden hingegen Chlor und Wasserstoff aus Salzsäurelösungen geringer Konzentrationen gewonnen, wobei die Abscheidung metallischer Komponenten allenfalls einen Nebenaspekt darstellt.

Ein weiterer Vorteil des erfindungsgemäßen Verfahrens besteht darin, daß auf die Vorschaltung aufwendiger Reinigungsverfahren, insbesondere Destillationsverfahren, vor der Wirbelschicht-Elektrolyse verzichtet werden kann. Unter Umständen bedarf es überhaupt keiner vorherigen Reinigung des Abwassers. In gewissen Fällen kann allerdings ein Filterungsprozeß mit mechanischer Filterung, Sedimentation etc. und gegebenenfalls auch ein Extraktionsverfahren für die Rückgewinnung von Metallen vor- oder nachgeschaltet werden. Diese Reinigungsprozesse sind insgesamt jedoch weniger aufwendig als die bisher bekannten mehrstufigen Verfahren.

Das erfindungsgemäße Verfahren eignet sich besonders für die Behandlung von salzsäurehaltigen Wässern von Rauchgas-Wäschern in Müllverbrennungsanlagen, insbesondere Sondermüllverbrennungsanlagen. Es empfiehlt sich, die Wirbelschichtelektrolyse bei einer Säurekonzentration von 1 bis 20 %, vorzugsweise von 4 bis 10 %, in einem Temperaturbereich von 10 bis 90 °C, vorzugsweise von 60 bis 70 °C und bei Drücken zwischen 0,8 und 3 bar (absolut), vorzugsweise bei 1,0 bis 1,2 bar (absolut) durchzuführen. Die Erzeugung der Wirbelschicht geschieht in an sich bekannter Weise durch den Elektrolyten selbst, indem er die Elektrolysezellen von unten nach oben in einer solchen Weise geregelt durchströmt, daß die die Wirbelschicht bildenden Partikel im Mittel gerade in der Schwebe gehalten werden. Eine gleichmäßige Strömungsverteilung über den Querschnitt wird durch Einbauten im unteren Teil der Elektrolysezelle wie sie der Fachmann kennt und einen entsprechend ausgebildeten Anströmboden, auf dem sich die Wirbelbettpartikel bei Stillstand der Anlage absetzen können, hergestellt. Die Wirbelschicht kann jedoch gleichermaßen auch dadurch erzeugt werden, daß von unten Gase durch die mit dem Elektrolyten gefüllte Elektrolysezelle geblasen werden. Vorteilhafterweise verwendet man hierzu die bei der Elektrolyse gewonnenen Gase Chlor für den Anoden- und Wasserstoff für den Kathodenraum.

Das von der Abfall-Salzsäure abgereicherte Wasser kann vorteilhafterweise in den Waschkreislauf für Rauchgase zurückgeführt werden. Bei Abwässern von Galvanik-Bädern erfolgt eine Rückführung in den Badprozeß. Alternativ kann das von der Abfall-Salzsäure abgereicherte Wasser auch zu anderen Zwecken, z.B. als Prozeßwasser wiederverwendet werden.

In den Unteransprüchen sind vorteilhafte Ausgestaltungen des Verfahrens angegeben, die die Durchführung der Wirbelschicht-Elektrolyse betreffen und diese in einem bevorzugten Ausführungsbeispiel für die vorerwähnten Abwässer aus Rauchgaswäschen optimieren. Die angegebenen Verfahrensmerkmale können auch zur Adaption an andere Abwässer oder zur Variation des Prozesses abgewandelt werden.

Die Erfindung ist in den Zeichnungen beispielsweise und schematisch dargestellt. Im einzelnen zeigen:
- Fig. 1:: eine Aufarbeitungsanlage für Waschwasser einer Rauchgaswäsche im Schemaplan,
- Fig. 2:: einen Längsschnitt durch die Elektrolyse-Zelle einer Wirbelschicht-Elektrolyseanlage,
- Fig. 3:: einen Schnitt durch einen die Wirbelkammer umgebenden Rahmen aus der Elektrolyse-Zelle,
- Fig. 4:: einen Längsschnitt durch einen aus mehreren parallel angeordneten Elektrolysezellen bestehenden Elektrolyseapparat.
- Fig. 5:: einen Schemaplan für die Wirbelschicht-Elektrolyse mit getrennten Anolyt- und Katholyt-Kreisläufen,
- Fig. 6:: eine alternative Ausführung einer Wirbelschicht-Elektrolyseapparatur.

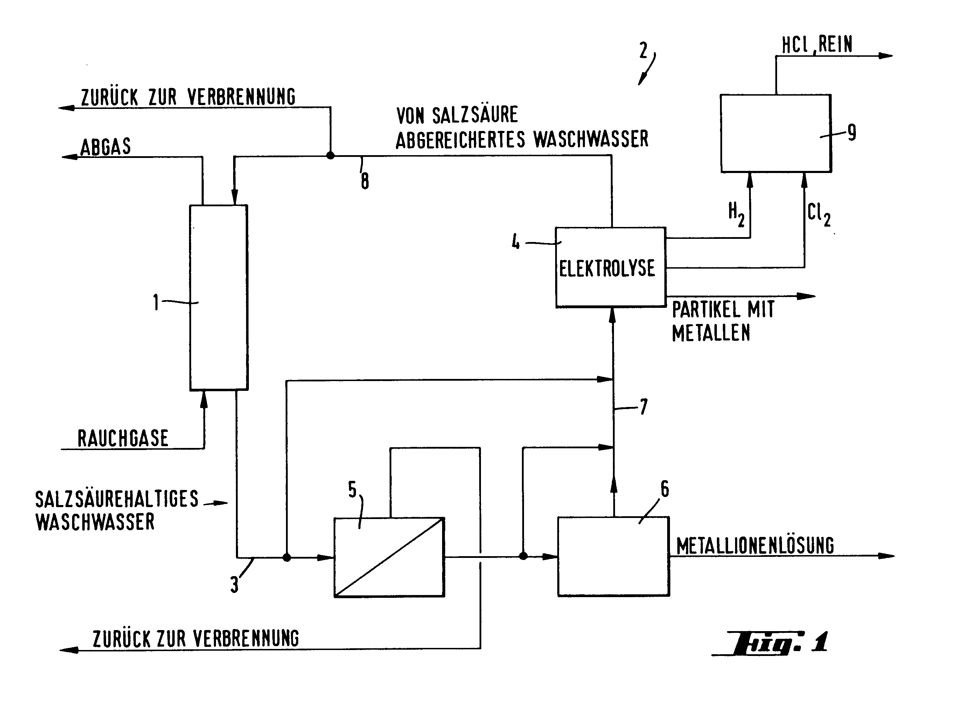

Fig. 1 zeigt im Schemaplan eine Aufarbeitungsanlage 2 für salzsaure Wässer aus einem Wäscher 1, hier einem Rauchgas-Wäscher einer Müllverbrennungsanlage. Das Rauchgas wird durch den Wäscher 1 geschickt, während das Waschwasser in einem Kreislauf 3; 7; 8 im Gegenstrom geführt wird. Wo dies zweckdienlich ist, kann es auch im Gleichstrom geführt werden. Das aus dem Wäscher 1 tretende Wasser enthält Abfall-Salzsäure in einer Konzentration von 1 bis 15 %. Darüber hinaus ist das Abwasser mit Begleitstoffen verunreinigt. Dies sind beispielsweise Feststoffpartikel aus der Verbrennung und dem Rauchgas, Flußsäure, Schwefelsäure und diverse andere Säuren. In diesem Wasser enthalten sind ferner Salze und auch organische Verbindungen.

Der Wäscher 1 ist über eine Zuführleitung 3; 7 mit einer Wirbelschicht-Elektrolyseanlage 4 verbunden. Hierbei gibt es gemäß Fig. 1 verschiedene Alternativen. Die Zuführung kann zum einen auf direktem Wege erfolgen, was in vielen Fällen geschieht. Das aus dem Wäscher kommende Wasser oder ein Teilstrom kann in der ersten Variante auch einer vorgeschalteten Filtereinrichtung 5 zugeführt werden. Hier werden die groben Feststoffe durch Filtration, Sedimentation oder ähnliche Techniken abgetrennt. Die abgeschiedenen Feststoffe können zur Mineralisierung in die Müllverbrennung rückgeführt werden.

Von der Filtereinrichtung 5 kann eine direkte Zuführung in die Wirbelschicht-Elektrolyseanlage 4 erfolgen. In einer zweiten Variante gemäß Fig. 1 kann aber auch eine Extraktionseinrichtung 6 zwischengeschaltet sein. Hier können Schwermetalle unter Verwendung bekannter Techniken zurückgewonnen werden. Die Metallionen-Lösung läßt sich einer Wiederverwertung zuführen.

In der Wirbelschichtelektrolyse werden durch elektrische Entladung von Chlor⁻ - und von H⁺ -Ionen aus der verdünnten Salzsäure räumlich voneinander getrennt Chlor und Wasserstoff in Gasform gewonnen. Sie können in dieser Form weiterverwendet werden. Im bevorzugten Ausführungsbeispiel ist eine nachgeschaltete Einrichtung 9 zur Chlorwasserstoffsynthese vorgesehen, mit der Salzsäure von hoher Reinheit und von hoher Konzentration hergestellt wird. Außerdem können gleichzeitig mit der elektrolytischen Zerlegung von Salzsäure in der Elektrolytlösung enthaltene Metallionen auf den Wirbelschichtpartikeln als Metalle abgeschieden werden. Zur Wiedergewinnung dieser Metalle können Wirbelschichtpartikel in gewissem Umfang kontinuierlich oder absatzweise aus der Elektrolyseanlage 4 abgezogen werden. Die auf diese Weise entfernten Mengen an Partikeln werden in gleichem Umfang sofort ersetzt.

Das von der Abfall-Salzsäure abgereichterte Wasser wird von der Wirbelschicht-Elektrolyseanlage 4 durch eine Rückführleitung 8 wieder dem Wäscher 1 zugeführt. Alternativ kann ein kleiner Teil des Wassers auch mit entsprechender Zwischenbehandlung in die Müllverbrennung zurückgegeben werden, um zu verhindern, daß sich nicht abscheidbare Komponenten wie Fluoride oder elektrochemisch nicht zersetzbare organische Substanzen anreichern. Der Waschwasserkreislauf 3; 7; 8 kann wahlweise offen oder zumindest teilweise geschlossen geführt werden.

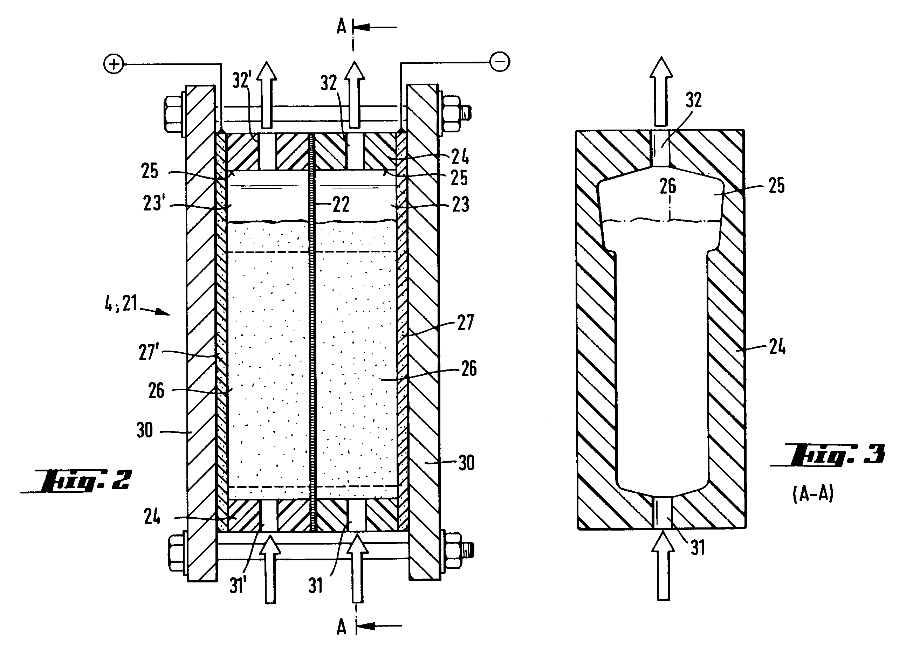

Fig. 2 - 6 verdeutlichen die Wirbelschicht-Elektrolyse und den verwendeten Wirbelschicht-Elektrolyseapparat 4 im einzelnen.

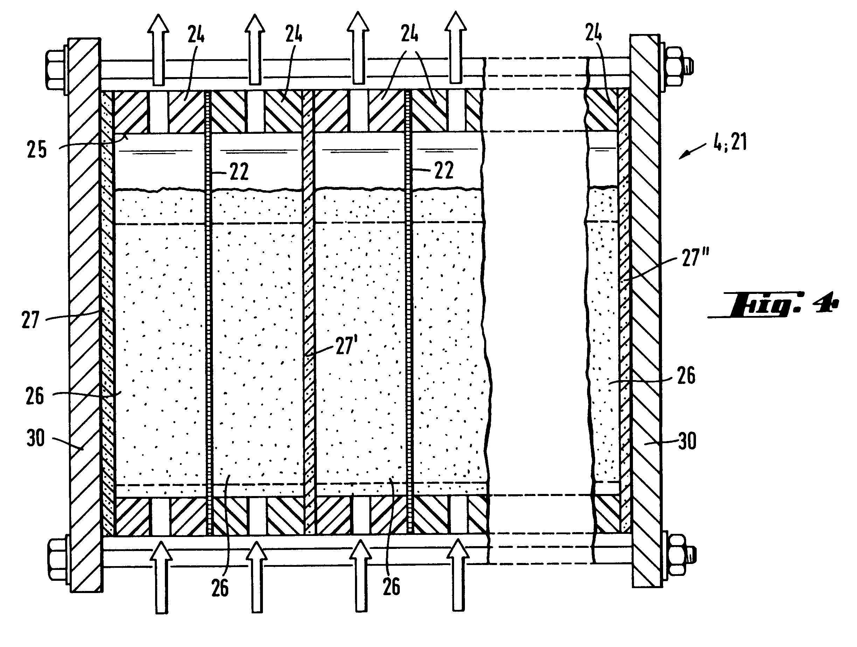

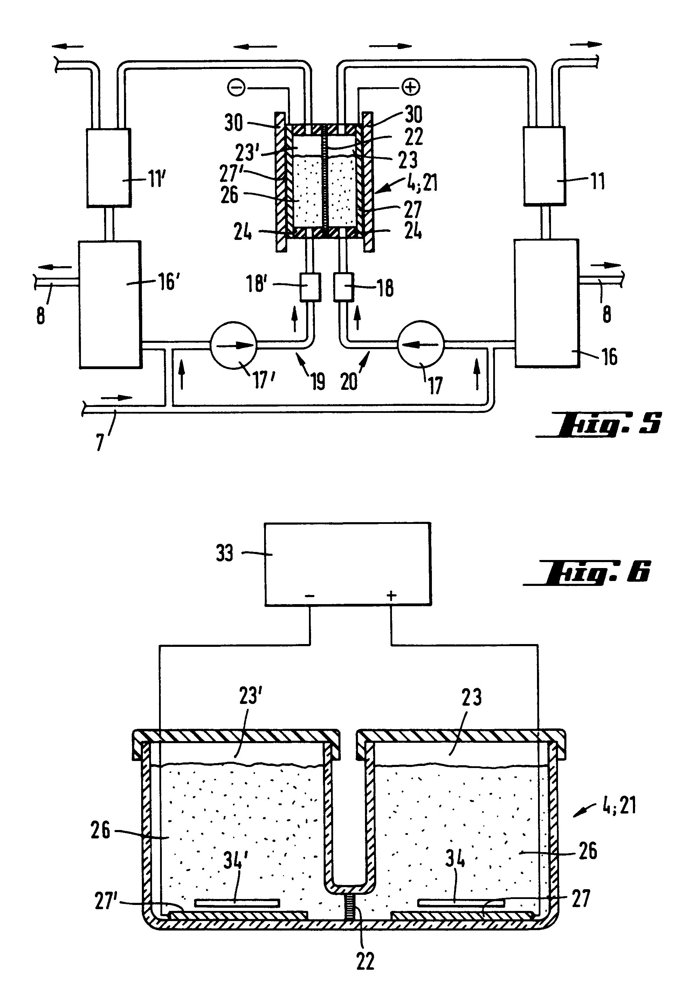

Die Wirbelschicht-Elektrolyseanlage 4 besteht je nach Anlagengröße aus einer (Fig. 2) oder mehreren (Fig. 4) Elektrolysezellen 21, die vorzugsweise parallel angeordnet sind, die aber auch in Serie angeordnet sein können. Fig. 2 zeigt den Längsschnitt durch eine solche Zelle 21. Es handelt sich hierbei um eine geteilte Zelle mit einer permeablen Trennwand 22, die im kontinuierlichen Verfahren betrieben wird. Die Wirbelschicht 26 wird durch die Abwasserströmung in Bewegung versetzt. Fig. 6 zeigt eine Alternative hierzu mit einer Elektrolysezelle 21 für wahlweise diskontinuierlichen Betrieb.

Die Trennung der Elektrolysezelle 21 in zwei Wirbelkammern 23; 23' ist für die separate Gewinnung von Chlor und Wasserstoff erforderlich. Für diese separate Gewinnung der beiden Stoffe ist es, siehe Fig. 5 verfahrenstechnisch vorteilhaft, eine Trennung der Elektrolytströme in einen Katholyt-Kreislauf 19 und einen Anolyt-Kreislauf 20 vorzunehmen. Die in Fig. 5 schematisch dargestellte Elektrolysezelle 21 entspricht der Ausführung von Fig. 2.

Zurückkommend auf Fig. 2 ist die hier dargestellte Elektrolysezelle 21 nach der Art eines Plattenwärmeaustauschers bzw. einer Filterpresse aufgebaut. Das salzsaure Wasser, nachfolgend als Elektrolyt bezeichnet, wird in einem gemeinsamen Strom oder gemäß Fig. 5 in getrennten Katholyt- und Anolyt-Strömen 19; 20 über einen unten liegenden Einlaß 31; 31' in die Elektolysezelle 21 geleitet, wird dort elektrolysiert und verläßt sie am anderen Ende wieder über einen Auslaß 32; 32'. In der Elektrolysezelle 21 sind die beiden Wirbelkammern 23; 23' beziehungsweise der Anoden und Kathodenraum durch eine großporige Trennwand 22 getrennt. Die Poren dieser z.B. aus Polypropylen bestehenden Trennwand 22 sind so groß gewählt, daß der Elektrolyt durchtreten kann und die Elektrolysegase Chlor und Wasserstoff weitgehend getrennt sind und daß die Partikel der Wirbelschicht 26 nicht von einem Raum in den anderen gelangen können.

Die beiden Wirbelkammern 23; 23' werden jeweils von einem in Fig. 3 im Schnitt A-A von Fig. 2 dargestellten Rahmen 24 aus elektrisch nicht leitendem, korrosionsfestem Material, z.B. Kunststoffen wie Polyvinylidenfluorid, Polyvinylchlorid, Polypropylen u.a. gebildet. Die Wirbelkammern 23; 23' haben in diesem Beispiel eine im wesentlichen rechteckige Form und besitzen am oberen Ende in der Nähe des Auslasses 32, 32' eine Querschnittserweiterung 25. Sie dient der Absenkung der Strömungsgeschwindigkeit des Elektrolyten, wodurch das Austragen von Wirbelgut vermieden wird. Zur Vermeidung ungenügend beströmter Zonen sind die Ecken der Wirbelkammern strömungsgünstig ausgeführt.

Die Wirbelkammern 23; 23' werden entlang ihrer gemeinsamen Berührungszone von der permeablen Trennwand 22 abgeschlossen. Den beiden Seiten dieser Trennwand gegenüber liegt je eine Plattenelektrode 27; 27' dicht an der Außenwand 30 der Zelle an. Jede dieser zwei Plattenelektroden 27; 27' ist mit einem der Pole einer nicht dargestellten Gleichspannungsquelle verbunden. Sie haben im Vergleich mit herkömmlichen Elektrolyseverfahren ohne Wirbelschicht einen großen Abstand von beispielsweise 2 bis 10 cm voneinander. In großtechnischen Anlagen kann der Abstand auch größer sein.

Die Plattenelektroden 27; 27' bestehen aus einem korrosionsfesten Material, vorzugsweise Graphit. Sie können gegebenenfalls mit Profilen wie Riefen versehen sein, um den Stromübergang an die Partikel der Wirbelschicht 26 zu verbessern. Für die elektrische Verbindung mit der Gleichstromquelle werden bekannte Mittel wie Schraubverbindungen, Klemmbacken oder ähnliche verwendet.

Fig. 4 zeigt schematisch eine leistungsfähigere Anordnung einer aus mehreren Elektrolysezellen bestehenden Wirbelschichtelektrolyseanlage. Die Zellen werden gemeinsam zwischen die Außenwände 30 eingespannt und sind parallel als bipolare Zellen geschaltet. Der Aufbau erfolgt nach dem Schema Außenwand 30 - Plattenelektrode 27 - Rahmen der Wirbelkammer 24 - Trennwand 22 - Rahmen der Wirbelkammer 24 - Plattenelektrode 27' - Rahmen der Wirbelkammer 24 - Trennwand 22 - Rahmen der Wirbelkammer 24 - und so fort, bis zum Abschluß, Plattenelektrode 27'' - Außenwand 30.

Bei entsprechender Ausgestaltung der Wirbelschicht-Elektrolyseanlage 4 können die Elektrolysegase Chlor und Wasserstoff aus den Wirbelkammern 23; 23' direkt abgeführt werden. In der bevorzugten Ausführungsform gemäß Fig. 5 verlassen jedoch das entstandene Gas und der abgereicherte Elektrolyt gemeinsam die Elektrolyseanlage 4 beziehungsweise die Elektrolyse-Zelle 21. Sie werden anschließend in lediglich schematisch dargestellte, in der Elektrolysetechnik übliche Entgaser 11, 11' eingeleitet. Für die getrennten Katholyt- und Anolyt-Kreisläufe 19; 20 sind jeweils ein oder mehrere separate Entgaser 11, 11' vorgesehen. Im Katholyt-Kreislauf 19 wird Wasserstoff und im Anolyt-Kreislauf 20 Chlor in Gasform abgeschieden.

Die getrennten Katholyt- und Anolyt-Kreisläufe 19; 20 gewährleisten mit besonderer Sicherheit die Trennung von Wasserstoff und Chlor und verhindern außerdem eine kathodische Reduktion von Chlor zu Chlorid.

Der die Entgaser verlassende, abgereicherte Elektrolyt wird in einen Vorratsbehälter 16; 16' geleitet, von dem aus er über die Rückführleitung 8 wieder dem Wäscher als Waschwasser zugeführt wird. Es ist auch möglich, einen Teil des abgereicherten Elektrolyten wieder in den zuführenden Teil der Kreislaufleitungen 19 und 20 einzuspeisen und der Elektrolysezelle wieder zuzuführen. Der Elektrolyt wird mit Hilfe von Pumpen 17; 17', vorzugsweise Kreiselpumpen von unten in die Elektrolysezellen eingedrückt. Mit einer Meß- und Regeleinrichtung 18; 18' kann jeweils der Durchfluß gesteuert werden.

Die Wirbelschicht 26 füllt die Elektrolysezelle bis zu der oben liegenden, einer Herabsetzung der Strömungsgeschwindigkeit dienenden Erweiterung aus. Ihre Partikel bestehen aus elektrisch leitendem Material, zum Beispiel Graphit, carbonisiertem Kohlenstoff, Glaskohlenstoff, C-Faserabschnitten, Metalloxiden, Metallen oder ähnlichem. Aus Korrosions- und Kostengründen sowie wegen seines guten Wirkungsgrades wird Graphit bevorzugt. Ein Teil des Wirbelgutes wird kontinuierlich oder absatzweise ersetzt. Die Wirbelschicht 26 hat einen günstigen Expansionsbereich, das heißt Höhe des Wirbelbettes zu Höhe des nicht aufgewirbelten Festbettes, von 1,0 bis 1,5. Für das beschriebene Ausführungsbeispiel wird ein Expansionsbereich von 1,1 bis 1,2 bevorzugt. Die Partikelgröße des Wirbelgutes beträgt 0,1 bis 3 mm, vorzugsweise 0,5 bis 1,5 mm, bei einer engen Kornverteilung.

Die Wirbelschicht-Elektrolyse kann bei Raumtemperatur stattfinden. Günstig ist ein Temperaturbereich von 10 bis 90 °C. Vorzugsweise wird die Wirbelschicht-Elektrolyse aber bei höheren Temperaturen als 10 °C durchgeführt, wie sie im wesentlichen den im Wäscher 1 herrschenden Temperaturen entsprechen. Bevorzugt ist hier ein Temperaturbereich von 60 bis 70 °C.

Es wird angestrebt, die Konzentration der Abfall-Salzsäure im Elektrolyt möglichst konstant und in dem eingangs angegebenen bevorzugten Bereich von 1,0 bis 15 % zu halten.

Bei der Wirbelschicht-Elektrolyse werden im salzsauren Wasser als Verunreinigungen enthaltene organische Verbindungen anodisch oxidiert oder kathodisch reduziert beziehungsweise mit anodischen oder kathodischen Reaktionsprodukten umgesetzt. Durch Porosität und Oberflächenbeschaffenheit der Partikel der Wirbelschicht 26 können diese Prozesse gezielt beeinflußt werden. Auf dem kathodischen Wirbelgut scheiden sich Metalle ab, die einem Recyclingprozeß unterzogen werden können.

Fig. 6 zeigt eine Testanordnung einer Wirbelschicht-Elektrolyseanlage 4 beziehungsweise der Elektrolysezelle 21. Zwei zylindrische Glasgefäße sind am Boden durch ein Glasrohr miteinander verbunden. Eine Glasfritte dient als Trennwand 22. Ihre Dichtheit ist so gewählt, daß der Elektrolyt hindurchdiffundieren kann, die Trennung der Elektrolysegase Chlor und Wasserstoff aber gewährleistet ist. Die Elektrolysegase werden bei dieser Ausführungsform direkt aus der Elektrolyse-Zelle 21 kopfseitig abgezogen.

Die Zuführelektroden 27; 27' sind als Ringe oder Platten ausgebildet und sind endseitig mit einer Gleichstromquelle 33 verbunden. Für die Turbulenz in der Wirbelschicht 26 sorgt in diesem Ausführungsbeispiel eine Wirbelvorrichtung 34; 34', die aus zwei in den beiden Glasbehältern angeordneten Magnetrührern besteht. Letztere sorgen auch für eine gleichmäßige Verteilung des Wirbelguts im Elektrolyten. Der Elektrolyt beziehungsweise das Abwasser können auch bei der in Fig. 6 gezeigten Ausführungsform kontinuierlich oder absatzweise zu- und abgeführt werden.

In den beschriebenen Ausführungsbeispielen ist sowohl im Anoden- als auch im Kathodenraum das Wirbelgut 26 gleich verteilt. Alternativ läßt sich die Wirbelschicht-Elektrolysezelle 4 beziehungsweise die Verteilereinrichtung für den Elektrolyten so ausbilden, daß das Wirbelgut 26 bevorzugt an die Kathode beziehungsweise Anode geführt wird. Ferner kann durch Gestaltung der Trennwand 22 oder auf andere Weise ein bestimmter Teil des Wirbelgutes vom Anodenraum in den Kathodenraum und in umgekehrter Richtung geführt werden. Im Anoden- und Kathodenraum können ferner unterschiedliche Wirbelgut-Partikel und/oder unterschiedliche Wirbelgutkonzentrationen oder auch unterschiedliche Wirbelgutexpansionen angewendet werden.

Das offenbarte Verfahren hat folgende Vorteile:
- Möglichkeit der Rückgewinnung von Chlor und Wasserstoff in reiner Form aus verdünnten, mit festen oder gelösten Verunreinigungen verschmutzten, salzsauren Waschwässern, speziell nach Rauchgaswäschern, im besonderen nach Rauchgaswäschern von Sondermüllverbrennungsanlagen
- Möglichkeit zur Gewinnung von reiner, konzentrierter Salzsäure aus verschmutzten stark verdünnten salzsauren Waschwässern
- Durchführung weitgehend störungsfreier Elektrolysen, da die die Ladungen übertragenden Flächen einer Selbstreinigung unterliegen und deshalb durch Schmutzpartikelablagerungen, Bildung von Schmutzpartikelbrücken oder sonstige abgeschiedene Stoffe keine Kurzschlüsse und keine die Effizienz der Elektrolyse beeinträchtigenden Überspannungseffekte mehr auftreten können
- Möglichkeit der Anwendung relativ niedriger Zellenspannungen bei großen Elektrodenabständen
- hohe elektrochemische Stromausbeuten.

## Patentansprüche

1. Verfahren zur Aufarbeitung von salzsäurehaltigem mit Begleitstoffen verunreinigtem, von Wäschern, insbesondere Rauchgaswäschern in Müllverbrennungsanlagen, von Galvanik-Bädern stammendem Wasser
dadurch gekennzeichnet, daß
das salzsäurehaltige Wasser einer Wirbelschicht-Elektrolyse zur Gewinnung von Chlor und Wasserstoff unterworfen wird.

2. Verfahren nach Patentanspruch 1,
dadurch gekennzeichnet, daß
das salzsäurehaltige Wasser vor der Wirbelschicht-Elektrolyse grob durch Filterung oder Sedimentation gereinigt wird.

3. Verfahren nach Patentanspruch 1,
dadurch gekennzeichnet, daß
das salzsäurehaltige Wasser ohne vorherige Reinigung der Wirbelschicht-Elektrolyse direkt zugeführt wird.

4. Verfahren nach den Patentansprüchen 1, 2 oder 3,
dadurch gekennzeichnet, daß
das salzsäurehaltige Wasser vor der Wirbelschicht-Elektrolyse in einer Elektrolyt-Konzentration von 1 bis 20 Gew.-%, vorzugsweise 4 bis 10 Gew.-% vorliegt.

5. Verfahren nach Patentanspruch 1 oder einem der diesem Anspruch folgenden Ansprüche,
dadurch gekennzeichnet, daß
der elektrolytisch abgeschiedene Wasserstoff und das elektrolytisch abgeschiedene Chlor durch eine nachgeschaltete Chlorwasserstoffsynthese zu reiner Salzsäure umgesetzt werden.

6. Verfahren nach Patentanspruch 1 oder einem der diesem Anspruch folgenden Ansprüche,
dadurch gekennzeichnet, daß
das von der Salzsäure abgereicherte Wasser in einen Waschkreislauf für Rauchgase zurückgeführt wird.

7. Verfahren nach Patentanspruch 1 oder einem der diesem Anspruch folgenden Ansprüche,
dadurch gekennzeichnet, daß
die Wirbelschicht-Elektrolyse in einem kontinuierlichen Verfahren mit einer durch eine flüssigkeitsdurchlässige Membran geteilten Elektrolyse-Zelle betrieben wird.

8. Verfahren nach Patentanspruch 7,
dadurch gekennzeichnet, daß
das Wasserstoff- und das Chlorgas den Elektrolyse-zellen in voneinander getrennten Produktströmen zusammen mit dem abgereicherten Elektrolyten entnommen werden und in jeweils voneinander getrennten nachgeschalteten Entgasern abgeschieden werden.

9. Verfahren nach Patentanspruch 1 oder einem der diesem Anspruch folgenden Ansprüche,
dadurch gekennzeichnet, daß
die Wirbelschicht-Elektrolyse in einem Temperaturbereich von 10 bis 90 °C, vorzugsweise 60 bis 70 °C durchgeführt wird.

10. Verfahren nach Patentanspruch 1 oder einem der diesem Anspruch folgenden Ansprüche,
dadurch gekennzeichnet, daß
die Wirbelschicht-Elektrolyse bei Drücken zwischen 0,8 und 3 bar (absolut), vorzugsweise bei 1,0 bis 1,2 bar (absolut) durchgeführt wird.

11. Verfahren nach Patentanspruch 1 oder einem der diesem Anspruch folgenden Ansprüche,
dadurch gekennzeichnet, daß die
die Wirbelschicht bildenden Partikel aus elektrisch leitfähigem Material bestehen.

12. Verfahren nach Patentanspruch 1 oder einem der diesem Anspruch folgenden Ansprüche,
dadurch gekennzeichnet, daß
die die Wirbelschicht bildenden Partikel aus der Gruppe Kohlenstoff und Graphit bestehen.

13. Verfahren nach Patentanspruch 1 oder einem der diesem Anspruch folgenden Ansprüche,
dadurch gekennzeichnet, daß
die Wirbelschicht durch die die Elektrolysezelle durchströmende Flüssigkeit erzeugt und aufrechterhalten wird.

14. Verfahren nach Patentanspruch 1 oder einem der diesem Anspruch folgenden Ansprüche,
dadurch gekennzeichnet, daß
die Wirbelschicht hauptsächlich oder ausschließlich durch Einblasen von Gasen, vorzugsweise von den bei der Elektrolyse erhaltenen Gasen erzeugt und aufrechterhalten wird.

15. Verfahren nach Patentanspruch 1 oder einem der diesem Anspruch folgenden Ansprüche,
dadurch gekennzeichnet, daß
im salzsäurehaltigen Wasser enthaltene organische Begleitstoffe bei der Wirbelschicht-Elektrolyse anodisch oxidiert oder kathodisch reduziert werden.

## Claims

1. Method for processing hydrochloric acid-containing water which is contaminated with accompanying substances and originates from washers, in particular flue gas washers in garbage-incinerating plants, from electroplating baths, characterised in that the water containing hydrochloric acid is subjected to a fluidized bed electrolysis in order to obtain chlorine and hydrogen.

2. Method according to claim 1, characterised in that before the fluidized bed electrolysis the water containing hydrochloric acid is crudely purified by filtration or sedimentation.

3. Method according to claim 1, characterised in that the water containing hydrochloric acid is supplied directly to the fluidized bed electrolysis without previous purification.

4. Method according to claims 1, 2 or 3, characterised in that, before the fluidized bed electrolysis, the water containing hydrochloric acid is present in an electrolyte concentration of 1 to 20 % by weight, preferably 4 to 10 % by weight.

5. Method according to claim 1 or one of the claims following this claim, characterised in that the electrolytically liberated hydrogen and the electrolytically liberated chlorine are converted by means of a downstream hydrogen chloride synthesis to form pure hydrochloric acid.

6. Method according to claim 1 or one of the claims following this claim, characterised in that the water depleted of the hydrochloric acid is conducted back into a washing circuit for flue gases.

7. Method according to claim 1 or one of the claims following this claim, characterised in that the fluidized bed electrolysis is operated in a continuous process with an electrolytic cell divided by a liquid-permeable membrane.

8. Method according to claim 7, characterised in that the hydrogen gas and the chlorine gas are withdrawn from the electrolytic cells in product streams, which are separate from each other, together with the depleted electrolyte and are stripped off in downstream gas expellers which are respectively separate from each other.

9. Method according to claim 1 or one of the claims following this claim, characterised in that the fluidized bed electrolysis is carried out in a temperature range of 10 to 90°C, preferably 60 to 70°C.

10. Method according to claim 1 or one of the claims following this claim, characterised in that the fluidized bed electrolysis is carried out at pressures between 0.8 and 3 bar (absolute), preferably at 1.0 to 1.2 bar (absolute).

11. Method according to claim 1 or one of the claims following this claim, characterised in that the particles forming the fluidized bed consist of electrically conductive material.

12. Method according to claim 1 or one of the claims following this claim, characterised in that the particles forming the fluidized bed belong to the group carbon and graphite.

13. Method according to claim 1 or one of the claims following this claim, characterised in that the fluidized bed is produced and maintained by the liquid flowing through the electrolytic cell.

14. Method according to claim 1 or one of the claims following this claim, characterised in that the fluidized bed is produced and maintained mainly or exclusively by blowing in gases, preferably gases obtained during the electrolysis.

15. Method according to claim 1 or one of the claims following this claim, characterised in that organic accompanying substances contained in the water containing hydrochloric acid are anodically oxidized or cathodically reduced during the fluidized bed electrolysis.

## Revendications

1. Procédé de traitement des eaux contenant de l'acide chlorhydrique polluées par des impuretés, provenant de laveurs, en particulier de laveurs de gaz de fumée dans des installation de combustion d'ordures, de bains de galvanoplastie, caractérisé en ce que les eaux contenant de l'acide chlorhydrique sont soumises à une électrolyse en couche tourbillonnante en vue de la production de chlore et d'hydrogène.

2. Procédé selon la revendication 1, caractérisé en ce que les eaux contenant de l'acide chlorhydrique avant l'électrolyse en couche tourbillonnante sont purifiées grossièrement par filtration ou par sédimentation.

3. Procédé selon la revendication 1, caractérisé en ce que les eaux contenant de l'acide chlorhydrique sont amenées directement sans purification préalable, à l'électrolyse en couche tourbillonnante.

4. Procédé selon les revendications 1, 2 ou 3, caractérisé en ce que les eaux contenant de l'acide chlorhydrique avant l'électrolyse en couche tourbillonnante se présentent dans une concentration d'électrolytes de 1 à 20 % en poids, de préférence de 4 à 10 % en poids.

5. Procédé selon la revendication 1 ou une des revendications qui suivent cette revendication, caractérisé en ce que l'hydrogène séparé par électrolyse et le chlore séparé par électrolyse sont transformés à l'aide d'une synthèse de gaz hydrochlorhydrique connectée ultérieurement, en acide chlorhydrique pur.

6. Procédé selon la revendication 1 ou une des revendications qui suivent cette revendication, caractérisé en ce que les eaux appauvries en acide chlorhydrique sont ramenées dans un circuit de lavage pour gaz de fumée.

7. Procédé selon la revendication 1 ou une des revendications qui suivent cette revendication, caractérisé en ce que l'électrolyse en couche tourbillonnante est conduite dans une processus en continu avec des cellules d'électrolyse divisées par une membrane perméable aux liquides.

8. Procédé selon la revendication 7, caractérisé en ce que l'hydrogène gazeux et le chlore gazeux sont retirés des cellules d'électrolyse dans des courants de produit séparés l'un de l'autre avec l'électrolyte appauvri, et sont extraits dans des dégazeurs post connectés respectivement séparés les uns des autres.

9. Procédé selon la revendication 1 ou une des revendications qui suivent cette revendication, caractérisé en ce que l'électrolyse en couche tourbillonnante est effectuée dans une plage de températures qui va de 10 à 90°C de préférence de 60 à 70°C.

10. Procédé selon la revendication 1 ou une des revendications qui suivent cette revendication, caractérisé en ce que l'électrolyse en couche tourbillonnante est effectuée à des pressions comprises entre 0,8 et 3 bars (absolus), de préférence de 1,0 à 1,2 bar (absolu).

11. Procédé selon la revendication 1 ou une des revendications qui suivent cette revendication, caractérisé en ce que les particules qui forment la couche tourbillonnante sont formées d'un produit qui conduit l'électricité.

12. Procédé selon la revendication 1 ou une des revendications qui suivent cette revendication, caractérisé en ce que les particules qui forment la couche tourbillonnante sont constituées du groupe formé du graphite et du carbone.

13. Procédé selon la revendication 1 ou une des revendications qui suivent cette revendication, caractérisé en ce que la couche tourbillonnante est obtenue et conservée par le liquide qui traverse la cellule d'électrolyse.

14. Procédé selon la revendication 1 ou une des revendications qui suivent cette revendication, caractérisé en ce que la couche tourbillonnante est obtenue et maintenue principalement ou exclusivement par insufflation de gaz, de préférence des gaz obtenus au cours de l'électrolyse.

15. Procédé selon la revendication 1 ou une des revendications qui suivent cette revendication, caractérisé en ce que les substances contaminantes organiques contenues dans les eaux renfermant de l'acide chlorhydrique sont oxydées à l'anode ou sont réduites à la cathode au cours de l'électrolyse en couche tourbillonnante.
